# EUROPÄISCHE PATENTANMELDUNG

(11) **EP 4 506 111 A1**
(43) Veröffentlichungstag der Anmeldung: **12.02.2025**
(21) Anmeldenummer: 24190635.3
(22) Anmeldetag: 24.07.2024
(51) Int. Cl.: B25J 9/10, B25J 13/02, B25J 15/04, B25J 15/06, B25J 19/00, B66C 1/02

(54) **HANDHABUNGSANLAGE UMFASSEND SCHLAUCHHEBER UND MANIPULATOR MIT GETRIEBE**

(30) Priorität: 08.08.2023 DE 102023121122
(71) Anmelder: J. Schmalz GmbH, 72293 Glatten (DE)
(72) Erfinder: Frey, Matthias, 72172 Sulz-Dürrenmettstetten (DE); Bläse, Nico, 72160 Horb (DE)
(74) Vertreter: DREISS Patentanwälte PartG mbB

(57) **Zusammenfassung**

Die Erfindung betrifft eine Handhabungsanlage (10), umfassend einen Schlauchheber (12), mit einem Hubschlauch (16), welcher einen Schlauchinnenraum (20) aufweist, und mit einem Endeffektor (22), welcher um eine Endeffektor-Drehachse (26) drehbar an dem Hubschlauch gehaltert ist, einen Manipulator (14), zum Verlagern des Endeffektors, eine Kopplungseinrichtung (34) zur Ankopplung des Schlauchhebers an den Manipulator, wobei die Kopplungseinrichtung einen Schlauchheber-seitigen ersten Kopplungsabschnitt (36) und einen Manipulator-seitigen zweiten Kopplungsabschnitt (38) aufweist, wobei der erste und der zweite Kopplungsabschnitt mittels einer Verbindungseinrichtung miteinander verbindbar sind, wobei der Manipulator ein angetriebenes Drehglied (48) aufweist, welches um eine Manipulator-Drehachse (50) drehbar ist, wobei die Kopplungseinrichtung ein Getriebe (36) umfasst, welches dazu ausgebildet ist, um im verbundenen Zustand von erstem und zweitem Kopplungsabschnitt eine Drehbewegung des Drehglieds um die Manipulator-Drehachse in eine Drehbewegung des Endeffektors um die Endeffektor-Drehachse zu übersetzen.

## Beschreibung

Die Erfindung betrifft eine Handhabungsanlage, umfassend einen Schlauchheber und einen Manipulator zum Verlagern des Schlauchhebers.

Schlauchheber sind Unterdruck-Handhabungsvorrichtungen, mit welchen Lasten mit Hilfe von Unterdruck angehoben, gegebenenfalls verlagert und wieder abgesetzt werden können. Die Hubbewegung wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist. An einem Ende des Hubschlauchs ist üblicherweise ein Endeffektor zum Greifen eines Gegenstands angeordnet, insbesondere in Form einer Sauggreifvorrichtung.

Schlauchheber mit Hubschlauch und Sauggreifvorrichtung sind beispielsweise aus der EP3078620A1 oder aus der EP3904269A1 bekannt.

Solche Schlauchheber werden üblicherweise manuell bedient, bspw. über eine an dem Hubschlauch angeordnete Bedienvorrichtung, mittels welcher der Hubschlauch verlagert werden kann und eine Unterdruckzufuhr zu dem Hubschlauch gesteuert werden kann.

Es sind auch Handhabungsanlagen bekannt, bei welchen ein Schlauchheber automatisiert mittels eines Roboters verlagerbar ist. Hierbei sind jedoch die Bewegungsfreiheitsgrade des Endeffektors in der Regel eingeschränkt.

Der vorliegenden Erfindung liegt die Aufgabe zugrunde, eine Handhabungsanlage eingangs genannter Art flexibel und sicher automatisiert betreibbar auszugestalten.

Diese Aufgabe wird erfindungsgemäß durch eine Handhabungsanlage mit den Merkmalen des Anspruchs 1 gelöst. Die Handhabungsanlage ist zum Handhaben von Gegenständen ausgebildet, insbesondere zum Anheben, Verlagern und wieder Absetzen eines Gegenstands.

Die Handhabungsanlage umfasst einen Schlauchheber. Der Schlauchheber umfasst einen Hubschlauch und einen Endeffektor zum Greifen eines Gegenstandes, insbesondere eine Sauggreifvorrichtung. Der Hubschlauch erstreckt sich entlang einer Hubschlauch-Längsachse und weist einen Schlauchinnenraum auf. Der Hubschlauch ist durch Beaufschlagung des Schlauchinnenraums mit Unterdruck verkürzbar und durch Belüften des Schlauchinnenraums (also durch Einströmen von Luft, insbesondere Umgebungsluft, in den Schlauchinnenraum) wieder verlängerbar. Die Handhabungsanlage kann außerdem eine Unterdruckerzeugungsvorrichtung zur Versorgung des Schlauchhebers mit Unterdruck umfassen. Vorzugsweise ist der Endeffektor, insbesondere bei einer Ausgestaltung als Sauggreifvorrichtung, durch den Schlauchinnenraum des Hubschlauchs hindurch mit Unterdruck versorgbar. Der Hubschlauch kann beispielsweise an einem dem Endeffektor abgewandten Ende an einem Träger oder einer Gebäudedecke befestigt sein, sodass er vertikal nach unten hängt. Insbesondere kann der Schlauchheber einen von dem Manipulator separat bereitgestellten Träger aufweisen, an dem der Hubschlauch mit einem dem Endeffektor abgewandten Ende befestigt ist. Der Träger kann beispielsweise durch ein Gerüst bereitgestellt sein. Der Träger kann auch Teil einer Haltevorrichtung zur Halterung des Hubschlauchs an einer Gebäudedecke sein.

Der Endeffektor ist um eine, vorzugsweise zu der Hubschlauch-Längsachse parallele oder konzentrische, Endeffektor-Drehachse drehbar an dem Hubschlauch gehaltert, insbesondere gelagert. Insofern ist der Endeffektor relativ zu dem Hubschlauch um die Endeffektor-Drehachse verdrehbar.

Die Handhabungsanlage umfasst außerdem einen Manipulator zum Verlagern des Endeffektors, insbesondere in einer zu der Endeffektor-Drehachse orthogonalen, vorzugsweise horizontalen, Ebene. Wie nachfolgend noch erläutert, kann der Manipulator zusätzlich zum Steuern des Hubschlauchs ausgebildet sein. Vorzugsweise handelt es sich bei dem Manipulator um einen Roboter, weiter vorzugsweise um einen kollaborierenden Roboter (Cobot) .

Die Handhabungsanlage umfasst außerdem eine Kopplungseinrichtung, mittels welcher der Schlauchheber, insbesondere wiederholbar lösbar, an den Manipulator ankoppelbar ist. Die Kopplungseinrichtung umfasst einen Schlauchheber-seitigen ersten Kopplungsabschnitt und einen Manipulator-seitigen zweiten Kopplungsabschnitt. Der Manipulator-seitige zweite Kopplungsabschnitt ist insbesondere mit dem Manipulator, bspw. einem Roboterarm, vorzugsweise fest, verbunden.

Die Kopplungseinrichtung umfasst außerdem eine Verbindungseinrichtung, mittels welcher der erste und der zweite Kopplungsabschnitt, vorzugsweise wiederholbar lösbar, miteinander verbindbar oder verbunden sind. Im verbundenen Zustand von erstem und zweitem Kopplungsabschnitt bilden Schlauchheber und Manipulator insofern vorzugsweise eine Bewegungseinheit derart, dass eine Verlagerungsbewegung des Manipulators in einer zu der Endeffektor-Drehachse orthogonalen Ebene in eine entsprechende Verlagerungsbewegung des Schlauchhebers übertragen wird.

Der Manipulator umfasst ein angetriebenes Drehglied, welches um eine Manipulator-Drehachse drehbar ist. Insbesondere kann das Drehglied durch eine angetriebene Manipulator-Drehachse, insbesondere Roboterachse, angetrieben oder gebildet sein.

Die Kopplungseinrichtung umfasst außerdem ein Getriebe, welches dazu ausgebildet ist, um im verbundenen Zustand von erstem und zweitem Kopplungsabschnitt (also dann, wenn der erste Kopplungsabschnitt und der zweite Kopplungsabschnitt mittels der Verbindungseinrichtung verbunden sind) eine Drehbewegung des Drehglieds um die Manipulator-Drehachse in eine Drehbewegung des Endeffektors um die Endeffektor-Drehachse zu übersetzen, vorzugsweise ohne dass dabei der erste und der zweite Kopplungsabschnitt verlagert wird. Insofern ist das Getriebe insbesondere dazu ausgebildet, ein Drehmoment zwischen Drehglied und Endeffektor zu übertragen.

Vorzugsweise ist das Getriebe derart ausgebildet, dass eine Drehbewegung des Endeffektors um die Endeffektor-Drehachse von einer Bewegung des ersten und des zweiten Kopplungsabschnitts entkoppelt ist. Mit anderen Worten ist das Getriebe insbesondere derart ausgebildet, dass eine Drehbewegung des Drehglieds um die Manipulator-Drehachse nicht in eine Verlagerungsbewegung des ersten und zweiten Kopplungsabschnitts übersetzt wird. Insofern ist das Getriebe insbesondere derart ausgebildet, dass eine Drehbewegung des Endeffektors um die Endeffektor-Drehachse auch bei feststehendem ersten und zweitem Kopplungsabschnitt (und somit bei feststehendem Hubschlauch) durch das Drehglied antreibbar ist.

Bei der vorgeschlagenen Handhabungsanlage wird insofern eine Drehachse des Manipulators zum Antrieb einer Drehbewegung des Endeffektors und somit einer Drehbewegung eines vom Endeffektor gehaltenen Gegenstands genutzt. Somit ist es insbesondere nicht erforderlich, zusätzliche Antriebseinrichtungen am Schlauchheber vorzusehen, um den Endeffektor zu drehen, was eine kostengünstige Ausgestaltung begünstigt. Zudem kann auf diese Weise eine Gewichtskraft am Schlauchheber reduziert werden, sodass zusätzliche Hubkraft für den zu greifenden Gegenstand bereitgestellt werden kann (da diese nicht für eine zusätzliche Antriebseinrichtung aufgewendet werden muss). Dadurch, dass eine Drehbewegung des Endeffektors um die Endeffektor-Drehachse von einer Verlagerungsbewegung des ersten und des zweiten Kopplungsabschnitts vorzugsweise entkoppelt ist, ist es möglich den Endeffektor und somit einen daran gehaltenen Gegenstand bei feststehendem ersten und zweiten Kopplungsabschnitt (und somit fester Position im Raum) um die Endeffektor-Drehachse zu drehen. Auf diese Weise kann ein gehaltener Gegenstand bspw. nach Anfahren einer Ablageposition in eine gewünschte Position gedreht werden. Insbesondere ermöglicht es die vorgeschlagene Lösung, eine Drehbewegung über weite Winkelbereiche, insbesondere Drehungen um die Endeffektor-Drehachse von 360° und mehr, zu realisieren.

Bei der vorgeschlagenen Handhabungsvorrichtung wird eine Hubkraft, vorzugsweise ausschließlich, durch den Hubschlauch bereitgestellt. Der Manipulator dient vorzugsweise lediglich der Positionierung des Endeffektors in einer zu der Endeffektor-Drehachse orthogonalen Ebene (x-y-Ebene) und zum Antrieb einer Drehbewegung des Endeffektors um die Endeffektor-Drehachse.

Im Rahmen einer vorteilhaften Ausgestaltung kann der Manipulator als Roboter mit einem Roboterarm und einem Roboterhandgelenk ausgebildet sein. Dann kann das Drehglied insbesondere durch eine Drehachse des Roboter-Handgelenks angetrieben oder bereitgestellt sein. In vorteilhafter Weise kann es sich bei dem Manipulator um einen 6-Achs-Roboter, insbesondere einen kollaborierenden 6-Achs-Roboter, handeln. Insbesondere kann das Drehglied durch die entlang der kinematischen Kette letzte Achse des Roboters, bei einem 6-Achs-Roboter insofern durch die sechste Achse, angetrieben oder gebildet sein.

Im Rahmen einer vorteilhaften Realisierungsform des Getriebes kann das Getriebe ein Endeffektor-seitiges erstes Übertragungsglied und ein Manipulator-seitiges zweites Übertragungsglied umfassen. Das Endeffektor-seitige erste Übertragungsglied ist insbesondere mit dem Endeffektor derart gekoppelt, dass eine Drehbewegung des ersten Übertragungsglieds in eine Drehbewegung des Endeffektors um die Endeffektor-Drehachse übertragen wird. Vorzugsweise ist das erste Übertragungsglied mit dem Endeffektor um die Endeffektor-Drehachse drehfest gekoppelt. Das Manipulator-seitige zweite Übertragungsglied ist insbesondere durch das Drehglied des Manipulators antreibbar oder angetrieben.

Das erste und das zweite Übertragungsglied sind vorzugsweise derart ausgebildet, dass sie im verbundenen Zustand von erstem und zweitem Kopplungsabschnitt (also dann, wenn erster und zweiter Kopplungsabschnitt über die Verbindungseinrichtung miteinander verbunden sind) miteinander in Eingriff stehen, insbesondere derart, dass ein Drehmoment zwischen dem ersten Übertragungsglied und dem zweiten Übertragungsglied übertragbar ist.

Um ein wiederholtes Ab- und Ankoppeln des Manipulators an den Schlauchheber zu begünstigen, kann es ferner vorteilhaft sein, wenn das erste Übertragungsglied und das zweite Übertragungsglied derart ausgebildet sind, dass sie wiederholbar in Eingriff und außer Eingriff bringbar sind, insbesondere durch eine translatorische Verschiebung relativ zueinander, vorzugsweise entlang einer zu der Endeffektor-Drehachse orthogonalen Richtung.

Im Rahmen einer bevorzugten Realisierungsform können das erste Übertragungsglied und das zweite Übertragungselement jeweils als Zahnrad ausgebildet sind. Insofern kann das Getriebe ein Endeffektor-seitiges erstes Zahnrad umfassen, welches vorzugsweise mit dem Endeffektor um die Endeffektor-Drehachse drehfest gekoppelt ist, und ein Manipulator-seitiges zweites Zahnrad, welches durch das Drehglied des Manipulators antreibbar ist, wobei das erste Zahnrad und das zweite Zahnrad im verbundenen Zustand von erstem und zweitem Kopplungsabschnitt miteinander kämmen, d.h. in kämmendem Eingriff miteinander stehen. Eine Ausgestaltung des Getriebes als Zahnradgetriebe ermöglicht eine besonders zuverlässige und präzise Kraftübertragung. Darüber hinaus ermöglicht eine Ausgestaltung der Übertragungsglieder als Zahnräder eine einfach lösbare Kupplung zwischen erstem und zweitem Übertragungsglied.

Im Rahmen einer alternativen vorteilhaften Ausgestaltung ist es auch denkbar, dass die Übertragungsglieder als Reibräder ausgebildet sind.

Darüber hinaus kann es vorteilhaft sein, wenn das Getriebe außerdem ein Manipulator-seitiges drittes Übertragungsglied (insbesondere drittes Zahnrad) aufweist, welches mit dem Drehglied um die Manipulator-Drehachse drehfest gekoppelt ist. Das dritte Übertragungsglied (insbesondere drittes Zahnrad) ist insofern insbesondere um die Manipulator-Drehachse drehbar. Das dritte Übertragungsglied (dritte Zahnrad) kann mit dem zweiten Übertragungsglied (zweiten Zahnrad) derart in, insbesondere kämmendem, Eingriff stehen, dass das zweite Übertragungsglied (zweite Zahnrad) durch das dritte Übertragungsglied (drittes Zahnrad) antreibbar ist. Das zweite Übertragungsglied ist insofern insbesondere zur Übertragung einer Drehbewegung des dritten Übertragungsglieds auf das erste Übertragungsglied ausgebildet. Bei einer solchen Ausgestaltung ist das zweite Übertragungsglied (zweite Zahnrad) dann vorzugsweise zwischen dem ersten Übertragungsglied (ersten Zahnrad) und dem dritten Übertragungsglied (dritten Zahnrad) angeordnet. Eine solche Ausgestaltung ermöglicht es, auf einfache konstruktive Weise eine Getriebeübersetzung unter Beibehaltung der Drehrichtung zu realisieren.

Im Rahmen einer vorteilhaften Weiterbildung kann der Schlauchheber-seitige erste Kopplungsabschnitt relativ zu dem Hubschlauch entlang der Endeffektor-Drehachse axial verlagerbar sein, insbesondere zwischen einer dem Hubschlauch nahen ersten Endposition und einer von dem Hubschlauch entfernten zweiten Endposition. Eine solche Ausgestaltung ermöglicht es, durch Verlagern des ersten Kopplungsabschnitts entlang der Endeffektor-Drehachse eine zusätzliche Funktionalität bereitzustellen, bspw. eine Steuerung des Schlauchhebers (siehe unten). Insbesondere kann der erste Kopplungsabschnitt relativ zu dem Hubschlauch entlang der Endeffektor-Drehachse axial verlagerbar an dem Hubschlauch gehaltert sein.

Insofern kann die Kopplungseinrichtung insbesondere derart ausgebildet sein, dass - im verbundenen Zustand von erstem und zweitem Kopplungsabschnitt - eine Verlagerungsbewegung des Manipulator-seitigen zweiten Kopplungsabschnitts in einer zu der Endeffektor-Drehachse orthogonalen Verlagerungsebene (in Folge einer Bewegung des Manipulators) in eine Bewegung des Hubschlauchs in dieser Verlagerungsebene übertragen wird, eine Verlagerungsbewegung des Manipulator-seitigen zweiten Kopplungsabschnitts in einer zu der Endeffektor-Drehachse parallelen Achse (also orthogonal zu der Verlagerungsebene) jedoch nicht in eine Verlagerungsbewegung des Hubschlauchs übertragen wird.

In diesem Zusammenhang kann es ferner vorteilhaft sein, wenn das Getriebe derart ausgebildet ist, dass das Endeffektor-seitige erste Übertragungsglied eine Längserstreckung entlang der Endeffektor-Drehachse derart aufweist, dass das zweite Übertragungsglied auch dann, wenn es in Eingriff mit dem ersten Übertragungsglied steht (also dann, wenn der erste Kopplungsabschnitt mit dem zweiten Kopplungsabschnitt verbunden ist) axial entlang der Endeffektor-Drehachse relativ zu dem ersten Übertragungsglied verschiebbar ist. Eine solche Ausgestaltung begünstigt eine axiale Verschiebbarkeit des ersten Kopplungsabschnitts entlang der Endeffektor-Drehachse bei gleichzeitiger Übertragung einer Drehbewegung um die Endeffektor-Drehachse. Der Schlauchheber-seitige erste Kopplungsabschnitt kann insofern relativ zu dem Endeffektorseitigen ersten Übertragungsglied (ersten Zahnrad) axial entlang der Endeffektor-Drehachse verlagerbar sein. Bei einer Ausgestaltung des Getriebes als Zahnradgetriebe kann insofern das erste Zahnrad eine Längserstreckung entlang der Endeffektor-Drehachse derart aufweisen, dass das zweite Zahnrad im kämmenden Zustand axial entlang der Endeffektor-Drehachse relativ zu dem ersten Zahnrad verschiebbar ist. Vorzugsweise ist eine Längserstreckung des ersten Übertragungsglieds (ersten Zahnrads) entlang der Endeffektor-Drehachse wenigstens doppelt so groß wie eine Erstreckung des zweiten Übertragungsglieds entlang der Endeffektor-Drehachse, insbesondere wenigstens dreifach so groß, weiter insbesondere wenigstens 4-fach so groß, weiter insbesondere wenigstens 5-fach so groß.

Wie vorstehend erwähnt, kann über eine Verlagerung des Schlauchheber-seitigen Kopplungsabschnitts entlang der Endeffektor-Drehachse eine Steuerungsfunktion für den Schlauchheber realisiert werden. Beispielsweise kann der Schlauchheber (auch unabhängig von einer Verstellbarkeit des ersten Kopplungsabschnitts) eine Ventileinrichtung zur Steuerung von Strömungsverbindungen aufweisen, insbesondere zur Steuerung einer Strömungsverbindung zwischen Schlauchinnenraum und einer Umgebung und/oder einer Strömungsverbindung zwischen dem Schlauchinnenraum und dem Endeffektor (Sauggreifvorrichtung). Dann kann der erste Kopplungsabschnitt mit der Ventileinrichtung derart zusammenwirken, dass durch Verschieben des ersten Kopplungsabschnitts entlang der Endeffektor-Drehachse die Ventileinrichtung betätigbar, insbesondere steuerbar, ist. Eine solche Ausgestaltung ermöglicht es insofern, die Ventileinrichtung durch eine Verlagerungsbewegung des Manipulators (übertragen auf die Ventileinrichtung über die Kopplungseinrichtung) zu betätigen bzw. zu steuern. Insbesondere kann die Ventileinrichtung ein Hubschlauch-Belüftungsventil zum Belüften des Schlauchinnenraums des Hubschlauchs aufweisen. Das Hubschlauch-Belüftungsventil kann insbesondere dazu ausgebildet sein, einen Zustrom von Umgebungsluft in den Schlauchinnenraum und somit eine Längenänderung des Hubschlauchs zu steuern. Der erste Kopplungsabschnitt kann dann mit dem Hubschlauch-Belüftungsventil derart zusammenwirken, dass durch Verschieben des ersten Kopplungsabschnitts entlang der Endeffektor-Drehachse eine Belüftungsstellung des Hubschlauch-Belüftungsventils veränderbar ist, insbesondere das Hubschlauch-Belüftungsventil wahlweise (teilweise oder vollständig) geöffnet oder (teilweise oder vollständig) geschlossen werden kann. Insofern kann durch Verschieben des ersten Kopplungsabschnitts entlang der Endeffektor-Drehachse eine Verkürzung oder Verlängerung des Hubschlauchs entlang der Hubschlauch-Längsachse gesteuert werden. Eine solche Ausgestaltung ermöglicht eine Steuerung einer Länge des Hubschlauchs, insbesondere einer von dem Hubschlauch ausgeübten Hubkraftwirkung, durch Bewegung des Manipulators, was eine automatisierte Bedienung ermöglicht.

In diesem Zusammenhang kann es weiter vorteilhaft sein, wenn der erste Kopplungsabschnitt und das Hubschlauch-Belüftungsventil derart miteinander gekoppelt sind, dass eine Verlagerung des ersten Kopplungsabschnitts um eine Steuerstrecke entlang der Endeffektor-Drehachse eine Belüftungsstellung des Hubschlauch-Belüftungsventils derart verändert (also zu einer Belüftung oder Entlüftung des Hubschlauchs derart führt), dass der Hubschlauch (bei Beaufschlagung des Schlauchinnenraums mit Unterdruck) entlang seiner Hubschlauch-Längsachse um eine der Steuerstrecke entsprechende oder zu der Steuerstrecke proportionalen Hubstrecke verkürzt oder verlängert wird, vorzugsweise und in einer dieser Position (Schwebeposition) gehalten wird. Dies begünstigt, dass eine Last durch den Hubschlauch und nicht durch den Manipulator aufgenommen wird.

Im Rahmen einer besonders vorteilhaften Ausgestaltung kann der erste Kopplungsabschnitt über einen Steuerhebel mit der Ventileinrichtung, insbesondere dem Hubschlauch-Belüftungsventil, gekoppelt sein. Der Steuerhebel kann vorzugsweise um eine Steuerhebel-Schwenkachse schwenkbar an dem Hubschlauch gehaltert sein. Der Steuerhebel weist vorzugsweise einen Betätigungsabschnitt auf, welcher mit der Ventileinrichtung, insbesondere dem Hubschlauch-Belüftungsventil, weiter insbesondere einem Ventilkörper des Hubschlauch-Belüftungsventils, zusammenwirkt, insbesondere derart, dass die Ventileinrichtung, insbesondere das Hubschlauch-Belüftungsventil, durch Verschwenken des Steuerhebels um die Steuerhebel-Schwenkachse betätigbar ist. Der Steuerhebel und der erste Kopplungsabschnitt können insbesondere derart zusammenwirken, dass der Steuerhebel durch axiale Verlagerung des ersten Kopplungsabschnitts entlang der Endeffektor-Drehachse um die Steuerhebel-Schwenkachse schwenkbar ist. Insofern kann durch axiale Verlagerung des ersten Kopplungsabschnitts entlang der Endeffektor-Drehachse die Ventileinrichtung bzw. das Hubschlauch-Belüftungsventil betätigt werden. Eine solche Ausgestaltung mit Steuerhebel ermöglicht eine konstruktiv einfache, dennoch robuste und in der Bedienung zuverlässige Steuermöglichkeit. Darüber hinaus ermöglicht die vorgeschlagene Lösung durch entsprechende Ausgestaltung des Steuerhebels auch nichtlineare Betätigungsvorgänge der Ventileinrichtung abzubilden.

Eine besonders vorteilhafte Realisierungsform kann darin bestehen, dass der Steuerhebel eine Steuerkurve aufweist, beispielsweise in Form eines Steuerschlitzes. Die Steuerkurve kann beispielsweise durch eine lokale Aussparung oder ein Langloch in dem Steuerhebel ausgebildet sein. An dem ersten Kopplungsabschnitt kann dann wenigstens ein Steuerglied, beispielsweise in Form eines Stiftes, Bolzens oder einer Schraube, vorgesehen sein, welches in die Steuerkurve des Steuerhebels eingreift. Die Steuerkurve kann insofern eine Kulissenführung für das Steuerglied bilden. Die Steuerkurve ist vorzugsweise derart ausgebildet, dass in Abhängigkeit einer Position des Steuerglieds entlang der Steuerkurve eine Schwenklage des Steuerhebels um die Steuerhebel-Schwenkachse (und somit eine Ventilstellung der Ventileinrichtung bzw. eine Belüftungsstellung des Hubschlauch-Belüftungsventil) einstellbar ist. Eine solche Ausgestaltung der Steuerkurve ermöglicht es durch Ausgestaltung einer Form der Steuerkurve, auch komplexe, insbesondere nichtlineare, Steuerungen der Ventilvorrichtung, insbesondere Belüftungsstellungen des Hubschlauch-Belüftungsventil, auf konstruktiv einfache Weise zu realisieren.

In vorteilhafter Weise kann die Steuerkurve eine Mehrzahl von unterschiedlich ausgebildeten Steuerkurvenabschnitten aufweisen. Beispielsweise kann die Steuerkurve einen ersten Steuerkurvenabschnitt aufweisen und einen sich an den ersten Steuerkurvenabschnitt anschließenden zweiten Steuerkurvenabschnitt. Beispielsweise ist es denkbar, dass die Steuerkurve einen ersten Steuerkurvenabschnitt und wenigstens einen zweiten Steuerkurvenabschnitt aufweist, wobei der erste und der zweite Steuerkurvenabschnitt derart ausgebildet sind, dass bei Verlagerung des Steuerglieds um eine Steuerstrecke entlang der Endeffektor-Drehachse der Steuerhebel bei Aufnahme des Steuergliedes in dem ersten Steuerkurvenabschnitt und um einen größeren Winkelbereich um die Steuerhebel-Schwenkachse verschwenkt wird als bei Aufnahme des Steuerglieds in dem zweiten Steuerkurvenabschnitt. Auf diese Weise können durch Verlagerung des Steuerglieds in unterschiedlichen Abschnitten der Steuerkurve unterschiedliche Ventilsteuerungen bereitgestellt werden, bspw. um ein unterschiedliches Ansprechverhalten des Hubschlauchs bei Verlagerung mit und ohne Gegenstand abbilden zu können.

Im Rahmen einer vorteilhaften Ausgestaltung kann die Steuerkurve wenigstens zwei, vorzugsweise drei, weiter vorzugsweise vier, zueinander winklig, selbst jedoch vorzugsweise gerade, ausgebildete Steuerkurvenabschnitte aufweisen. Insbesondere können die Steuerkurvenabschnitte ineinander übergehen. In Abhängigkeit der Neigung bzw. Steigung relativ zu der Endeffektor-Drehachse kann dann ein Ansprechverhalten der Ventileinrichtung, insbesondere eine Öffnungsgeschwindigkeit des Hubschlauch-Belüftungsventils, unterschiedlich sein.

Insbesondere kann die Steuerkurve derart ausgebildet sein, dass die Ventileinrichtung, insbesondere das Hubschlauch-Belüftungsventil, bei Anlage des Steuerglieds in einem ersten Steuerkurvenabschnitt der Steuerkurve sich in einer ersten Ventilstellung, insbesondere ersten Belüftungsstellung, befindet und bei Anlage in einem zweiten Steuerkurvenabschnitt der Steuerkurve sich in einer zweiten Ventilstellung, insbesondere zweiten Belüftungsstellung, befindet. Insbesondere ist die die Ventileinrichtung, insbesondere das Hubschlauch-Belüftungsventil, in der ersten Ventilstellung weiter geöffnet ist als in der zweiten Ventilstellung. Beispielsweise ist es denkbar, dass das Belüftungsventil in der ersten Ventilstellung vollständig oder teilweise geöffnet ist und in der zweiten Belüftungsstellung geschlossen oder teilweise geöffnet ist. Bei dem ersten Steuerkurvenabschnitt kann es sich insbesondere um einen ersten Endabschnitt der Steuerkurve handeln. Bei dem zweiten Steuerkurvenabschnitt kann es sich insbesondere um einen zweiten Endabschnitt der Steuerkurve handeln.

Bei einer vorteilhaften Weiterbildung kann der erste Kopplungsabschnitt über den Steuerhebel an dem Hubschlauch gehaltert sein, beispielsweise durch Eingreifen des Steuerglieds in die Steuerkurve. Insofern kann eine vom Hubschlauch beabstandete Endlage des ersten Kopplungsabschnitts beispielsweise durch eine Endlage des Steuergliedes in der Steuerkurve definiert sein.

Im Rahmen einer vorteilhaften Weiterbildung kann der erste Kopplungsabschnitt an dem Hubschlauch derart gehaltert sein, dass er im getrennten Zustand von erstem und zweitem Kopplungsabschnitt (also dann, wenn der erste und der zweite Kopplungsabschnitt nicht mittels der Verbindungseinrichtung verbunden sind) sich in einer Ruhekonfiguration entlang der Endeffektor-Drehachse befindet oder in diese schwerkraftbedingt überführt wird. Vorzugsweise wirkt der erste Kopplungsabschnitt in dieser Ruhekonfiguration mit der Ventileinrichtung, insbesondere dem Hubschlauch-Belüftungsventil, über den Steuerhebel derart zusammen (insbesondere ist der Steuerhebel in der Ruhekonfiguration des ersten Kopplungsabschnitts derart um die Steuerhebel-Schwenkachse verschwenkt), dass die Ventileinrichtung, insbesondere das Hubschlauch-Belüftungsventil, zumindest teilweise geöffnet ist, insbesondere derart, dass sich der Hubschlauch verlängert. Bei einer Ausgestaltung mit Steuerkurve ist es insbesondere denkbar, dass sich das Steuerglied in der Ruhekonfiguration des ersten Kopplungsabschnitts in dem vorstehend erwähnten ersten Endabschnitt der Steuerkurve befindet. Insbesondere kann das Hubschlauch-Belüftungsventil in der Ruhekonfiguration derart geöffnet sein, dass der Hubschlauch sich gemächlich verlängert oder in einer vorgegebenen Schwebeposition gehalten wird, was einen sicheren Betrieb der Handhabungsanlage auch bei Energieausfall begünstigt.

Eine vorteilhafte konstruktive Ausgestaltung der Handhabungsanlage kann darin bestehen, dass der Endeffektor über eine Verbindungsstange mit dem Hubschlauch verbunden ist. Die Verbindungsstange kann insbesondere die Endeffektor-Drehachse definieren. Die Verbindungsstange ist vorzugsweise an einem Ende mit dem Endeffektor drehfest verbunden und an dem anderen Ende um die Endeffektor-Drehachse drehbar mit dem Hubschlauch verbunden. Eine solche Verbindungsstange kann insbesondere als Angriffspunkt für den Manipulator dienen. Vorteilhafterweise kann der erste Kopplungsabschnitt zwischen dem ersten Ende und dem zweiten Ende der Verbindungsstange angeordnet sein.

In diesem Zusammenhang kann es besonders vorteilhaft sein, wenn der erste Kopplungsabschnitt an der Verbindungsstange derart angeordnet ist, insbesondere die Verbindungsstange derart umgreift, dass die Verbindungsstange und der erste Kopplungsabschnitt sowohl translatorisch (axial) entlang der Endeffektor-Drehachse als auch rotatorisch um die Endeffektor-Drehachse relativ zueinander verlagerbar sind, vorzugsweise die Verbindungsstange und der erste Kopplungsabschnitt aber in einer zu der Endeffektor-Drehachse orthogonalen Richtung formschlüssig zusammenwirken. Insofern werden Bewegungen des ersten Kopplungsabschnitts entlang der Endeffektor-Drehachse insbesondere nicht auf die Verbindungsstange übertragen, Bewegung des ersten Kopplungsabschnitts orthogonal zu der Endeffektor-Drehachse vorzugsweise aber schon. Insbesondere kann der erste Kopplungsabschnitt an der Verbindungsstange drehbar gelagert sein. Beispielsweise kann der erste Kopplungsabschnitt ein Kugellager umfassen, über welches der erste Kopplungsabschnitt an der Verbindungsstange gelagert ist.

Bei einer Ausgestaltung mit Verbindungsstange kann es ferner vorteilhaft sein, wenn eine Drehbewegung des Drehglieds um die Manipulator-Drehachse über die Verbindungsstange auf den Endeffektor übertragen wird. Beispielsweise kann das erste Endeffektor-seitige Übertragungsglied (erstes Zahnrad) koaxial zu der Verbindungsstange angeordnet sein und/oder mit der Verbindungsstange um die Endeffektor-Drehachse drehfest verbunden sein. Das erste Übertragungsglied (erstes Zahnrad) kann sich in vorteilhafter Weise axial entlang einer Längserstreckung der Verbindungsstange erstrecken. Insbesondere können eine Zahnradachse und eine Längsachse der Verbindungsstange zueinander kollinear verlaufen.

Eine vorteilhafte Weiterbildung kann darin bestehen, dass die Verbindungsstange eine integrierte Fluidführung, insbesondere Unterdruckführung, zur Versorgung des Endeffektors mit Fluid, insbesondere Unterdruck, aufweist. Die Fluidführung erstreckt sich vorzugsweise von dem ersten Ende der Verbindungsstange zu dem zweiten Ende, also insbesondere von Hubschlauch zu Endeffektor. Die Fluidführung ist vorzugsweise an einem Ende mit dem Schlauchinnenraum des Hubschlauchs und an dem anderen Ende mit dem Endeffektor strömungsverbunden. Eine solche Ausgestaltung ermöglicht es, den Endeffektor durch die Verbindungsstange hindurch mit Unterdruck zu versorgen, wodurch bspw. Störkonturen durch außenliegende Fluidleitungen reduziert werden können. Beispielsweise kann die Verbindungsstange als Verbindungsrohr mit innenliegender Fluidführung ausgebildet sein.

Wie vorstehend erwähnt, ermöglicht die vorgeschlagene Ausgestaltung eine automatisierte Steuerung des Schlauchhebers. In diesem Zusammenhang kann es ferner vorteilhaft sein, wenn die Kopplungseinrichtung bzw. die Verbindungseinrichtung dazu ausgebildet ist, den Manipulator bedarfsweise, insbesondere in einer Notsituation wie bspw. bei einem Energieausfall, automatisch von dem Schlauchheber abzukoppeln. Dies ermöglicht es beispielsweise, dass der Manipulator im abgekoppelten Zustand automatisiert in eine Sicherheitskonfiguration verfährt, in welcher keine Gefahr für eine sich möglicherweise im gleichen Arbeitsbereich befindliche Person ausgeht. Auf diese Weise kann eine Sicherheitsfunktion bereitgestellt werden, insbesondere ohne dass zusätzlich externe Sicherungsmaßnahmen (z.B. Schutzzäune um eine Handhabungsanlage oder eine unterbrechungsfreie Stromversorgung) zwingend erforderlich sind.

Dies kann in vorteilhafter Weise dadurch realisiert sein, dass die Verbindungseinrichtung derart ansteuerbar ausgebildet ist, dass sie wahlweise aktivierbar oder deaktivierbar ist, insbesondere wiederholbar aktivierbar, deaktivierbar und wieder aktivierbar. Insofern ist die Verbindungseinrichtung insbesondere derart ansteuerbar, dass eine den ersten Kopplungsabschnitt und den zweiten Kopplungsabschnitt miteinander koppelnde Verbindungswirkung der Verbindungseinrichtung wahlweise aktivierbar oder deaktivierbar ist, insbesondere aktivierbar, deaktivierbar und wieder aktivierbar ist. Insbesondere ist die Verbindungseinrichtung derart ausgebildet, dass in dem aktivierten Zustand der erste und der zweite Kopplungsabschnitt miteinander verbunden sind, und in dem deaktivierten Zustand der erste und der zweite Kopplungsabschnitt voneinander werkzeugfrei lösbar sind. Die Handhabungsanlage kann dann vorzugsweise eine Steuerung zum Ansteuern der Verbindungseinrichtung aufweisen. Bei der Steuerung kann es sich insbesondere um eine Manipulator-Steuerung, insbesondere Robotersteuerung, handeln. Es ist auch denkbar, dass es sich bei der Steuerung um eine externe Steuerung handelt, bspw. als Teil einer übergeordneten Steuerung der Handhabungsanlage.

Eine vorteilhafte Realisierungsform der Verbindungseinrichtung kann darin bestehen, dass die Verbindungseinrichtung wenigstens einen bedarfsweise aktivierbaren oder deaktivierbaren Elektromagneten aufweist. Der wenigstens eine Elektromagnet ist vorzugsweise derart ausgebildet, dass in einem aktivierten, insbesondere bestromten, Betriebszustand des wenigstens einen Elektromagneten der erste und der zweite Kopplungsabschnitt miteinander verbunden sind, und in einem deaktivierten, insbesondere unbestromten, Betriebszustand des wenigstens einen Elektromagneten der erste und der zweite Kopplungsabschnitt voneinander, insbesondere werkzeugfrei, lösbar sind. Auf diese Weise ist auf einfache konstruktive Weise eine Sicherheitsfunktion geschaffen, da bei einem Stromausfall die Magnetwirkung des wenigstens einen Elektromagneten automatisch nachlässt und somit erster und zweiter Kopplungsabschnitt (und infolgedessen Manipulator und Schlauchheber) automatisch voneinander getrennt werden. Es ist möglich, dass der erste und der zweite Kopplungsabschnitt im aktivierten Betriebszustand durch die Magnetkraftwirkung des Elektromagneten direkt miteinander verbunden sind. Es ist auch denkbar, dass der Elektromagnet eine Verbindungseinrichtung betätigt. Der wenigstens eine Elektromagnet kann an dem ersten Kopplungsabschnitt und/oder an dem zweiten Kopplungsabschnitt angeordnet sein.

In diesem Zusammenhang kann es außerdem vorteilhaft sein, wenn die Verbindungseinrichtung einen Energiespeicher, bspw. Kondensator, aufweist. Der Energiespeicher ist insbesondere dazu ausgebildet, den wenigstens einen Elektromagneten mit der erforderlichen Energie zu versorgen, um den aktivierten Betriebszustand zumindest kurzzeitig aufrechtzuerhalten. Dies ermöglicht es, den wenigstens einen Elektromagnet auch bei einem Stromausfall für eine gewisse Zeit im aktivierten (bestromten) Betriebszustand (und somit ersten und zweiten Kopplungsabschnitt im verbundenen Zustand) zu halten, bspw. solange, bis der Manipulator bzw. Roboter in eine Sicherheitsposition verfahren ist. Der Energiespeicher kann Manipulator-seitig oder Schlauchheber-seitig angeordnet sein.

Die Erfindung wird im Folgenden anhand der Figuren näher erläutert. Es zeigen:
- Fig. 1: eine skizzierte Darstellung einer Ausgestaltung einer Handhabungsanlage mit Schlauchheber und Manipulator;

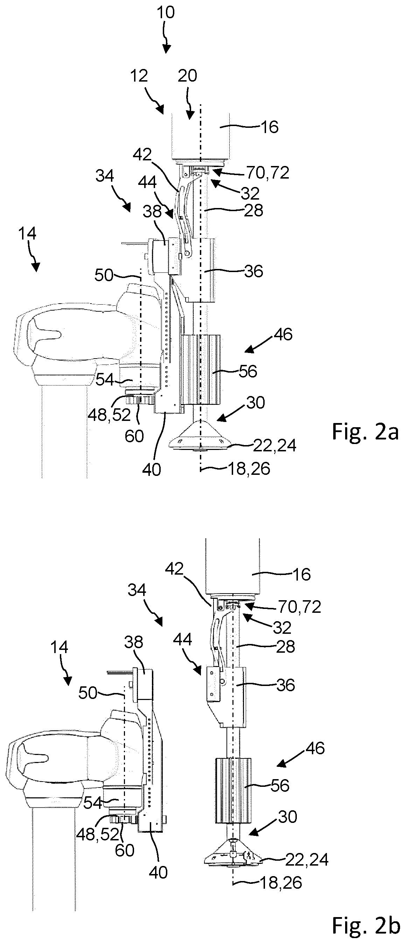

- Fig. 2a-b: skizzierte Darstellungen der Handhabungsanlage gemäß Fig. 1 bei angekoppeltem Schlauchheber (Ansicht a) und bei abgekoppeltem Schlauchheber (Ansicht b) in einer Seitenansicht;

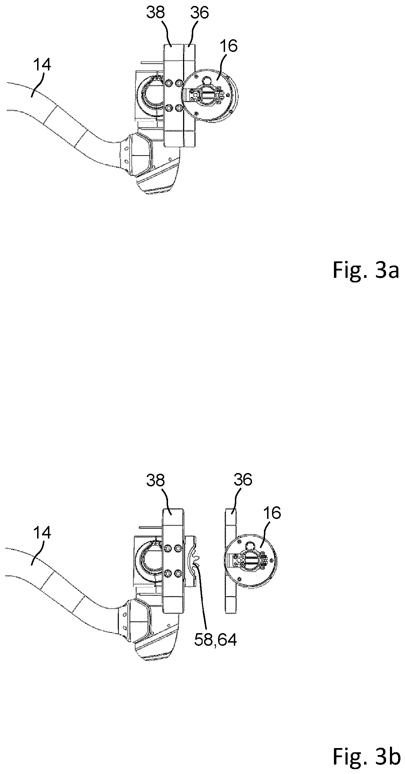

- Fig. 3a-b: skizzierte Darstellungen der Handhabungsanlage gemäß Fig. 1 bei angekoppeltem Schlauchheber (Ansicht a) und bei abgekoppeltem Schlauchheber (Ansicht b) in einer Draufsicht;
- Fig. 4: Detailansicht der Handhabungsanlage gemäß Fig. 1 zur Erläuterung des Getriebes; und
- Fig. 5: Detailansicht der Handhabungsanlage gemäß Fig. 1 im Bereich des Steuerhebels.

In der nachfolgenden Beschreibung sowie in den Figuren sind für identische oder einander entsprechende Merkmale jeweils dieselben Bezugszeichen verwendet.

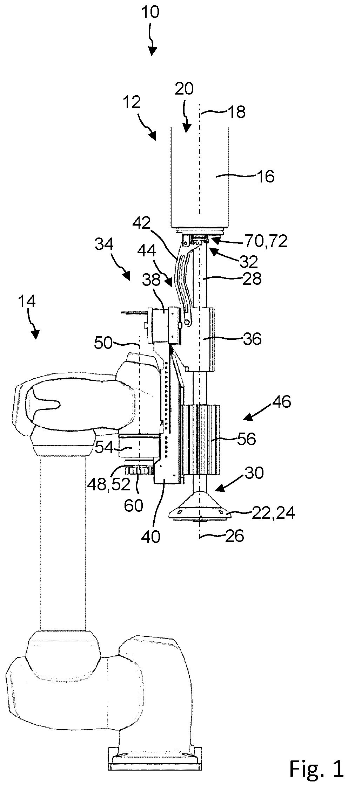

Die Figur 1 zeigt eine Handhabungsanlage, welche insgesamt mit dem Bezugszeichen 10 bezeichnet ist. Die Handhabungsanlage 10 umfasst einen Schlauchheber 12 und einen Manipulator 14.

Der Manipulator 14 ist als Roboter ausgebildet, vorzugsweise als kollaborierender Roboter. Im dargestellten Beispiel ist der Manipulator 14 beispielhaft als 6-Achs-Roboter ausgebildet.

Der Schlauchheber 12 umfasst einen Hubschlauch 16, welcher sich entlang einer Hubschlauch-Längsachse 18 erstreckt. Der Hubschlauch 16 umschließt einen Schlauchinnenraum 20. Der Hubschlauch 16 ist durch Beaufschlagen des Schlauchinnenraums 20 mit Unterdruck verkürzbar und durch Belüften des Schlauchinnenraums 20 wieder verlängerbar. Zu diesem Zweck kann die Handhabungsanlage 10 eine Unterdruckerzeugungseinrichtung (nicht dargestellt) umfassen.

Der Schlauchheber 12 umfasst außerdem einen Endeffektor 22 zum Greifen eines Gegenstands. Im dargestellten Beispiel ist der Endeffektor 22 als Sauggreifvorrichtung 24 zum Ansaugen eines Gegenstands (nicht dargestellt) ausgebildet.

Der Endeffektor 22 ist um eine, im Beispiel mit der Hubschlauch-Längsachse 18 kollineare, Endeffektor-Drehachse 26 relativ zu dem Hubschlauch 16 verdrehbar.

Beispielhaft und bevorzugt ist der Endeffektor 22 über eine Verbindungsstange 28 mit einem unteren Ende des Hubschlauchs 16 verbunden. An einem oberen Ende (nicht dargestellt) des Hubschlauchs 16 kann dieser mit einem Gerüst oder Träger (nicht dargestellt) verbunden sein.

Die Verbindungsstange 28 erstreckt sich entlang der Endeffektor-Drehachse 26 (Hubschlauch-Längsachse 18). Die Verbindungsstange 28 ist an einem ersten (unteren) Ende 30 mit dem Endeffektor 22 drehfest gekoppelt und an einem zweiten (oberen) Ende 32 an dem Hubschlauch 16 um die Endeffektor-Drehachse 26 drehbar gelagert. Insofern ist die Verbindungsstange 28 relativ zu dem Hubschlauch 16 um die Endeffektor-Drehachse 22 drehbar.

Die Verbindungsstange 28 umfasst im Beispiel eine innenliegende Fluidführung (nicht sichtbar) zur Versorgung des Endeffektors 22 mit Unterdruck. Die Fluidführung erstreckt sich beispielhaft und bevorzugt von dem ersten Ende 30 zu dem zweiten Ende 32 der Verbindungsstange 28, wobei die Fluidführung an dem ersten Ende 30 mit dem Endeffektor 22 und an dem zweiten Ende 32 mit dem Schlauchinnenraum 20 des Hubschlauchs 16 strömungsverbunden ist. Somit kann der Endeffektor 22 durch den Schlauchinnenraum 20 des Hubschlauchs 16 hindurch mit Unterdruck versorgt werden (nachfolgend noch näher erläutert). Bei nicht dargestellten Ausgestaltungen kann die Fluidführung auch außerhalb der Verbindungsstange 28 verlaufen.

Der Schlauchheber 12 ist über eine Kopplungseinrichtung 34 an den Manipulator 14 wiederholbar lösbar ankoppelbar. Die Figur 1 zeigt dabei die Kopplungseinrichtung 34 in einem verbundenen Zustand von Manipulator 14 und Schlauchheber 12.

Die Kopplungseinrichtung 34 umfasst einen Schlauchheber-seitigen ersten Kopplungsabschnitt 36 und einen Manipulator-seitigen zweiten Kopplungsabschnitt 38 (nachfolgend noch näher beschrieben).

Der erste Kopplungsabschnitt 36 ist im Beispiel über einen Steuerhebel 42 an dem Hubschlauch 16 gehaltert (nachfolgend noch mit Detail erläutert). Bei nicht dargestellten Ausgestaltungen kann der erste Kopplungsabschnitt 36 auch auf andere Weise mit dem Hubschlauch 16 verbunden sein, bspw. an der Verbindungsstange 28 gehaltert sein. Der Manipulator-seitige zweite Kopplungsabschnitt 38 ist mit dem Manipulator 14 vorzugsweise fest verbunden, beispielsweise über eine Halterung 40.

Wie in Figur 1 erkennbar, ist der erste Kopplungsabschnitt 36 beispielhaft und bevorzugt zwischen dem ersten Ende 30 der Verbindungsstange 28 und dem zweiten Ende 32 der Verbindungsstange 28 angeordnet. Im konkreten Beispiel ist der erste Kopplungsabschnitt 36 sowohl translatorisch entlang der Endeffektor-Drehachse 26 als auch rotatorisch um die Endeffektor-Drehachse 26 verlagerbar an der Verbindungsstange 28 angeordnet.

Beispielhaft umgreift der erste Kopplungsabschnitt 36 die Verbindungsstange 28, sodass der erste Kopplungsabschnitt 36 entlang der Endeffektor-Drehachse 26 relativ zu der Verbindungsstange 28 verlagerbar ist und zudem die Verbindungsstange 28 relativ zu dem ersten Kopplungsabschnitt 36 um die Endeffektor-Drehachse 26 drehbar ist. Insofern kann eine Verlagerungsbewegung des Manipulators 14 in einer zu der Endeffektor-Drehachse 26 orthogonalen Ebene auf den Hubschlauch 16 übertragen werden (beispielsweise um den Endeffektor 22 an eine gewünschte Ablageposition für einen gegriffenen Gegenstand zu verfahren). Eine Verlagerungsbewegung des Manipulators 14 entlang der Endeffektor-Drehachse 26 führt hingegen zu einer axialen Verschiebung des ersten Kopplungsabschnitt 36 relativ zu dem Hubschlauch 16.

Der erste und der zweite Kopplungsabschnitt 36, 38 sind über eine Verbindungseinrichtung 44 wiederholbar lösbar miteinander verbindbar und somit Manipulator 14 und Schlauchheber 12 wiederholbar lösbar aneinander ankoppelbar.

Im dargestellten Beispiel umfasst die Verbindungseinrichtung 44 einen bedarfsweise aktivierbaren oder deaktivierbar Elektromagneten (beispielhaft in dem ersten und/oder zweiten Kopplungsabschnitt 36, 38 integriert). Wie vorstehend erwähnt, ist der Elektromagnet derart ausgebildet und angeordnet, dass in einem aktivierten Betriebszustand des Elektromagneten der erste und der zweite Kopplungsabschnitt 36, 38 miteinander verbunden sind und in einem deaktivierten Betriebszustand des Elektromagneten der erste und der zweite Kopplungsabschnitt 36, 38 voneinander, insbesondere werkzeugfrei, lösbar sind. Um den Elektromagnet auch bei einem Energieausfall zumindest kurzzeitig mit Strom zu versorgen, kann die Verbindungseinrichtung 44 optional einen Energiespeicher (nicht dargestellt), insbesondere in Form eines Kondensators, aufweisen. Bei nicht dargestellten Ausgestaltungen kann die Verbindungseinrichtung 44 auch andere Verbindungsmechanismen umfassen.

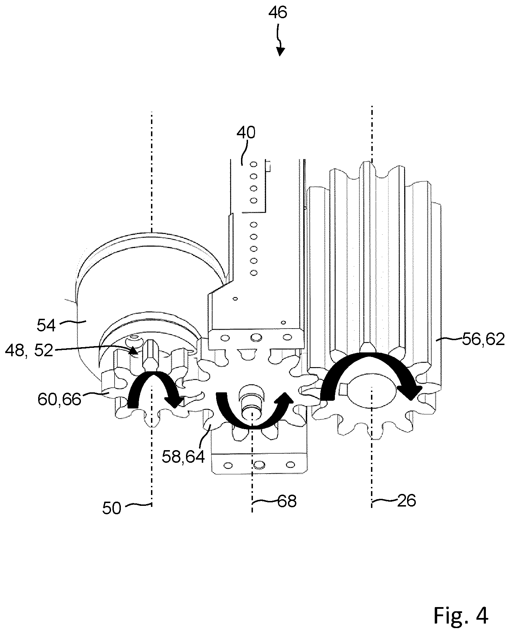

Die Kopplungseinrichtung 34 umfasst außerdem ein Getriebe 46 (Detailansicht Fig. 4), welches dazu ausgebildet ist, eine Drehbewegung eines Drehglieds 48 des Manipulators 14 um eine Manipulator-Drehachse 50 in eine Drehbewegung des Endeffektors 22 um die Endeffektor-Drehachse 26 zu übersetzen.

Im dargestellten Beispiel ist das Drehglied 48 durch eine Roboterdrehachse 52 des Handgelenks 54 des Roboters 14 gebildet. Im Konkreten handelt es sich bei der Roboterdrehachse 52 um die entlang der kinematischen Kette des Roboters letzte Achse.

Eine beispielhafte und bevorzugte Ausgestaltung des Getriebes 46 wird nachfolgend unter Bezugnahme auf die Figur 4 erläutert.

Wie in Figur 4 erkennbar, umfasst das Getriebe 46 ein Endeffektor-seitiges erstes Übertragungsglied 56, ein Manipulator-seitiges zweites Übertragungsglied 58 sowie ein Manipulator-seitiges drittes Übertragungsglied 60. Im dargestellten Beispiel sind die Übertragungsglieder 56, 58, 60 jeweils als Zahnräder ausgebildet. Insofern umfasst das Getriebe 46 ein Endeffektor-seitiges erstes Zahnrad 62, ein Manipulator-seitiges zweites Zahnrad 64 und ein Manipulator-seitiges drittes Zahnrad 66. Bei nicht dargestellten Ausgestaltungen ist es aber auch denkbar, dass die Übertragungsglieder 54, 56, 58 in Form von Reibrädern ausgebildet sind.

Das Endeffektor-seitige erste Zahnrad 62 ist im Beispiel konzentrisch um die Verbindungsstange 28 angeordnet und mit dieser drehfest um die Endeffektor-Drehachse 26 verbunden. Insofern wird eine Drehbewegung des ersten Zahnrads 62 um die Endeffektor-Drehachse 26 in eine Drehbewegung der Verbindungsstange 28 und somit des Endeffektors 22 um die Endeffektor-Drehachse 26 übertragen.

Das Manipulator-seitige dritte Zahnrad 66 ist mit dem Drehglied 48 (Roboterdrehachse 52) drehfest gekoppelt und somit um die Manipulator-Drehachse 50 angetrieben.

Wie in Figur 4 gezeigt, ist das zweite Zahnrad 64 dazu ausgebildet, ein Drehmoment zwischen erstem Zahnrad 62 und drittem Zahnrad 66 zu übertragen. Beispielhaft ist das zweite Zahnrad 64 um eine zu der Manipulator-Drehachse 50 parallele Drehachse 68 an dem zweiten Kopplungsabschnitt 38, insbesondere der Halterung 40, gehaltert.

Im verbundenen Zustand von erstem und zweitem Kopplungsabschnitt 36, 38 (also dann, wenn der erste Kopplungsabschnitt 36 und der zweite Kopplungsabschnitt 38 mittels der Verbindungseinrichtung 44 miteinander verbunden sind), stehen das erste Zahnrad 62 und das zweite Zahnrad 64 in kämmendem Eingriff miteinander (vgl. Fig. 4), sodass ein Drehmoment zwischen Roboterdrehachse 52 und Endeffektor 22 übertragen werden kann. Wie vorstehend erwähnt, ist eine Drehbewegung des Endeffektors 22 um die Endeffektor-Drehachse 26 insofern von einer Bewegung des ersten und des zweiten Kopplungsabschnitts 36, 38 entkoppelt. Mit anderen Worten kann auch bei ansonsten feststehendem Manipulator 14 (also ohne Bewegung einer der weiteren Roboterachsen) eine Drehbewegung des Endeffektors 22 um die Endeffektor-Drehachse 26 realisiert werden.

Das erste Zahnrad 62 und der erste Kopplungsabschnitt 36 sind relativ zueinander entlang der Endeffektor-Drehachse 26 verlagerbar. Da im verbundenen Zustand von erstem und zweitem Kopplungsabschnitt 36, 38 der erste Kopplungsabschnitt 36 mit dem zweiten Zahnrad 64 und dem dritten Zahnrad 66 bewegungsgekoppelt ist, führt eine Verlagerungsbewegung des Manipulators 14 entlang der Endeffektor-Drehachse 26 zu einer Relativbewegung von dem zweitem Zahnrad 64 relativ zu dem ersten Zahnrad 62.

Eine solche Relativbewegung im kämmenden Zustand der Zahnräder 62, 64 ist beispielhaft dadurch realisiert, dass das erste Zahnrad 62 eine Längserstreckung entlang der Endeffektor-Drehachse 26 derart auf, dass das zweite Zahnrad 64, unter Beibehaltung einer Drehmomentübertragung, entlang der Endeffektor-Drehachse 26 relativ zu dem ersten Zahnrad 62 verschiebbar ist (vgl. Figuren 1 und 4).

Wie vorstehend erwähnt, ist der erste Kopplungsabschnitt 36 im Beispiel über einen Steuerhebel 42 an dem Hubschlauch 16 gehaltert. Der Steuerhebel 42 ist insbesondere dazu ausgebildet, eine Ventileinrichtung 70 des Hubschlauchs 16 anzusteuern. Bei nicht dargestellten Ausgestaltungen kann die Handhabungsanlage 10 auch keine solche Ventil-Steuerfunktion aufweisen, insbesondere keinen Steuerhebel 42.

Im konkreten Beispiel umfasst die Ventileinrichtung 70 ein Hubschlauch-Belüftungsventil 72, welches dazu ausgebildet ist, den Schlauchinnenraum 20 des Hubschlauchs 16 bedarfsweise mit einer Umgebung zu verbinden und somit ein Einströmen von Umgebungsluft in den Schlauchinnenraum 20 zu ermöglichen. Auf diese Weise kann eine Längenänderung des Hubschlauchs 16 gesteuert werden.

Die Ventileinrichtung 70 kann außerdem ein optionales Endeffektor-Belüftungsventil (nicht dargestellt) umfassen, welches dazu ausgebildet ist, eine Strömungsverbindung zwischen Schlauchinnenraum 20 und Endeffektor 22 (im Beispiel durch die Verbindungsstange 28 hindurch) wahlweise freizugeben oder abzusperren.

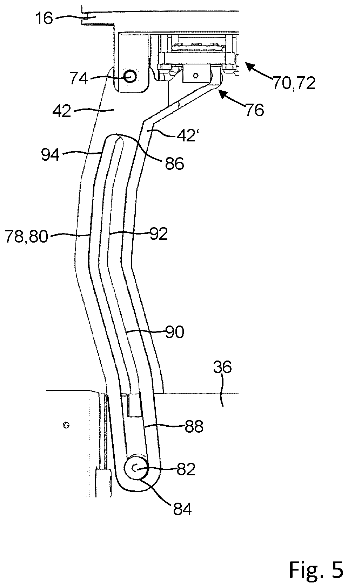

Wie in Fig. 5 gezeigt, ist der Steuerhebel 42 um eine Steuerhebel-Schwenkachse 74 schwenkbar an dem Hubschlauch 16 gehaltert. Der Steuerhebel 42 ist mit einem Betätigungsabschnitt 76 mit dem Hubschlauch-Belüftungsventil 72 derart gekoppelt, dass durch Verschwenken des Steuerhebels 42 um die Steuerhebel-Schwenkachse 74 eine Belüftungsstellung des Hubschlauch-Belüftungsventil 72 veränderbar ist.

Beispielhaft kann das Hubschlauch-Belüftungsventil 72 als Belüftungsklappe ausgebildet sein, deren Öffnungswinkel durch Veränderung einer Schwenkbewegung des Steuerhebels 42 um die Steuerhebel-Schwenkachse 74 veränderbar ist.

Beispielhaft und bevorzugt ist eine Schwenkbewegung des Steuerhebels 42 um die Steuerhebel-Schwenkachse 74 durch eine axiale Verlagerung des ersten Kopplungsabschnitts 36 entlang der Endeffektor-Drehachse 26 antreibbar.

Im Konkreten umfasst die der Steuerhebel 42 eine Steuerkurve 78, welche im Beispiel als Steuerschlitz 80 in Form eines Langloches ausgebildet ist. Wie in Fig. 5 gezeigt, greift der erste Kopplungsabschnitt 36 mit einem Steuerglied 82 in die Steuerkurve 78 ein. Das Steuerglied 82 ist beispielhaft in Form einer Schraube oder Bolzens ausgebildet. Im Zuge einer axialen Bewegung des ersten Kopplungsabschnitts 36 entlang der Endeffektor-Drehachse 26 (in Figur 5 "nach oben" oder "nach unten") verfährt das Steuerglied 82 entlang der Steuerkurve 78 zwischen einer in Figur 5 dargestellten untersten Position (von dem Hubschlauch 16 entlang der Endeffektor-Drehachse 26 am weitesten entfernt), in welcher das Steuerglied 82 an dem unteren Ende 84 der Steuerkurve 78 anliegt, und einer obersten Position (nicht dargestellt), in welcher das Steuerglied 82 an dem oberen Ende 86 der Steuerkurve 78 anliegt.

Wie in Figur 5 gezeigt, weist die Steuerkurve 78 einen winkligen Verlauf auf, sodass eine axiale Bewegung des ersten Kopplungsabschnitts 36 entlang der Endeffektor-Drehachse 26 in eine Schwenkbewegung des Steuerhebels 42 um die Steuerhebel-Schwenkachse 74 übersetzt wird - und somit die Ventileinrichtung 70 betätigt wird.

Im konkreten Beispiel weist die Steuerkurve 78 einen ersten Steuerkurvenabschnitt 88, einen sich an den ersten Steuerkurvenabschnitt 88 anschließenden zweiten Steuerkurvenabschnitt 90, einen sich an den zweiten Steuerkurvenabschnitt 90 anschließenden dritten Steuerkurvenabschnitt 92 und einen sich an den dritten Steuerkurvenabschnitt 92 anschließenden vierten Steuerkurvenabschnitt 94 auf. Wie aus Fig. 5 ersichtlich, sind die Steuerkurvenabschnitte 88, 90, 92, 94 zueinander winklig angeordnet, selbst jedoch vorzugsweise gerade ausgebildet.

In Abhängigkeit einer Neigung des jeweiligen Steuerkurvenabschnitts 88, 90, 92, 94 relativ zu der Endeffektor-Drehachse 26 führt eine Verlagerung des ersten Kopplungsabschnitts 36 entlang der Endeffektor-Drehachse 26 zu einer mehr oder weniger schnellen Öffnungs- bzw. Schließbewegung des Hubschlauch-Belüftungsventils 72.

In dem dargestellten Beispiel (vgl. Fig. 5) ist ein weiterer Steuerhebel 42' vorgesehen, welcher analog zu dem ersten Steuerhebel 42 ausgebildet ist. Bei nicht dargestellten Ausgestaltungen kann der weitere Steuerhebel 42' aber auch unterschiedlich ausgebildet sein, bspw. eine unterschiedliche geformte Steuerkurve 78 aufweisen. Bei wiederum anderen nicht dargestellten Ausgestaltungen kann aber auch nur ein Steuerhebel 42 vorgesehen sein.

## Patentansprüche

1. Handhabungsanlage (10), umfassend:
- einen Schlauchheber (12), mit einem Hubschlauch (16), welcher einen Schlauchinnenraum (20) aufweist, und mit einem Endeffektor (22), insbesondere Sauggreifvorrichtung (24), welcher um eine Endeffektor-Drehachse (26) drehbar an dem Hubschlauch (16) gehaltert ist;
- einen Manipulator (14), insbesondere Roboter, zum Verlagern des Endeffektors (22), insbesondere in einer zu der Endeffektor-Drehachse (26) orthogonalen Ebene;
- eine Kopplungseinrichtung (34) zur Ankopplung des Schlauchhebers (12) an den Manipulator (14), wobei die Kopplungseinrichtung (34) einen Schlauchheber-seitigen ersten Kopplungsabschnitt (36) und einen Manipulator-seitigen zweiten Kopplungsabschnitt (38) aufweist, wobei der erste und der zweite Kopplungsabschnitt (36, 38) mittels einer Verbindungseinrichtung (44), insbesondere wiederholbar lösbar, miteinander verbindbar sind,
wobei der Manipulator (14) ein angetriebenes Drehglied (48) aufweist, welches um eine Manipulator-Drehachse (50) drehbar ist, wobei die Kopplungseinrichtung (34) ein Getriebe (36) umfasst, welches dazu ausgebildet ist, um im verbundenen Zustand von erstem und zweitem Kopplungsabschnitt (36, 38) eine Drehbewegung des Drehglieds (48) um die Manipulator-Drehachse (50) in eine Drehbewegung des Endeffektors (22) um die Endeffektor-Drehachse (26) zu übersetzen.

2. Handhabungsanlage (10) nach Anspruch 1, wobei das Getriebe (46) derart ausgebildet ist, dass eine Drehbewegung des Endeffektors (22) um die Endeffektor-Drehachse (26) von einer Bewegung des ersten und des zweiten Kopplungsabschnitts (36, 38) entkoppelt ist.

3. Handhabungsanlage (10) nach Anspruch 1 oder 2, wobei der Manipulator (14) als Roboter, insbesondere 6-Achs-Roboter, mit einem Roboterarm und einem Roboterhandgelenk (54) ausgebildet ist, wobei das Drehglied (48) durch eine Roboterdrehachse (52) des Roboterhandgelenks (54), insbesondere durch die entlang der kinematischen kette letzte Achse des Roboters, angetrieben ist.

4. Handhabungsanlage (10) nach einem der vorherigen Ansprüche, das Getriebe (46) umfassend
ein Endeffektor-seitiges erstes Übertragungsglied (56), insbesondere erstes Zahnrad (62), welches mit dem Endeffektor (22) um die Endeffektor-Drehachse (26) drehfest gekoppelt ist, und
ein Manipulator-seitiges zweites Übertragungsglied (58), insbesondere zweites Zahnrad (64), welches über das Drehglied (48) des Manipulators (14) angetrieben ist, wobei das erste Übertragungsglied (56) und das zweite Übertragungsglied (58), insbesondere das erste Zahnrad (62) und das zweite Zahnrad (64), im verbundenen Zustand von erstem und zweitem Kopplungsabschnitt (36, 38) miteinander in Eingriff stehen, insbesondere miteinander kämmen.

5. Handhabungsanlage (10) nach dem vorherigen Anspruch, das Getriebe (46) außerdem umfassend ein Manipulator-seitiges drittes Übertragungsglied (60), insbesondere drittes Zahnrad (66), welches mit dem Drehglied (48) drehfest gekoppelt ist und mit dem zweiten Übertragungsglied (58), insbesondere zweiten Zahnrad (64), derart in, insbesondere kämmenden, Eingriff steht, dass das zweite Übertragungsglied (58), insbesondere zweites Zahnrad (64), durch das dritte Übertragungsglied (60), insbesondere drittes Zahnrad (66), antreibbar ist.

6. Handhabungsanlage (10) nach einem der Ansprüche 4 oder 5, wobei das erste Übertragungsglied (56), insbesondere das erste Zahnrad (62), eine Längserstreckung entlang der Endeffektor-Drehachse (26) derart aufweist, dass das zweite Übertragungsglied (58), insbesondere das zweite Zahnrad (64), in Eingriff, insbesondere im kämmenden Zustand, axial entlang der Endeffektor-Drehachse (26) relativ zu dem ersten Übertragungsglied (56), insbesondere zu dem ersten Zahnrad (62), verschiebbar ist.

7. Handhabungsanlage (10) nach einem der vorherigen Ansprüche, wobei der erste Kopplungsabschnitt (36) relativ zu dem Hubschlauch (16) entlang der Endeffektor-Drehachse (26) axial verlagerbar ist, insbesondere axial verlagerbar an dem Hubschlauch (16) gehaltert ist.

8. Handhabungsanlage (10) nach dem vorherigen Anspruch, wobei der Schlauchheber (12) eine, insbesondere an oder in dem Hubschlauch (16) angeordnete, Ventileinrichtung (70) zur Steuerung von Strömungsverbindungen aufweist, wobei der erste Kopplungsabschnitt (36) mit der Ventileinrichtung (70) derart zusammenwirkt, dass durch Verschieben des ersten Kopplungsabschnitts (36) entlang der Endeffektor-Drehachse (26) die Ventileinrichtung (70) betätigbar, insbesondere steuerbar, ist.

9. Handhabungsanlage (10) nach dem vorherigen Anspruch, wobei die Ventileinrichtung (70) ein Hubschlauch-Belüftungsventil (72) zum Belüften des Schlauchinnenraums (20) aufweist,
wobei der erste Kopplungsabschnitt (36) mit dem Hubschlauch-Belüftungsventil (72) derart zusammenwirkt, dass durch Verschieben des ersten Kopplungsabschnitts (36) entlang der Endeffektor-Drehachse (26), eine Belüftungsstellung des Hubschlauch-Belüftungsventils (72) veränderbar ist.

10. Handhabungsanlage (10) nach einem der Ansprüche 8 oder 9, wobei der erste Kopplungsabschnitt (36) über einen Steuerhebel (42) mit der Ventileinrichtung (70), insbesondere dem Hubschlauch-Belüftungsventil (72), gekoppelt ist, wobei der Steuerhebel (42) um eine Steuerhebel-Schwenkachse (74) schwenkbar an dem Hubschlauch (16) gehaltert ist, wobei der Steuerhebel (42) einen Betätigungsabschnitt (76) aufweist, welcher mit der Ventileinrichtung (70), insbesondere dem Hubschlauch-Belüftungsventil (72), derart zusammenwirkt, dass die Ventileinrichtung (70), insbesondere das Hubschlauch-Belüftungsventil (72), durch Verschwenken des Steuerhebels (42) um die Steuerhebel-Schwenkachse (74) betätigbar ist,
wobei der Steuerhebel (42) durch axiale Verlagerung des ersten Kopplungsabschnitts (36) entlang der Endeffektor-Drehachse (26) um die Steuerhebel-Schwenkachse (74) schwenkbar ist.

11. Handhabungsanlage (10) nach dem vorherigen Anspruch, wobei der Steuerhebel (42) eine Steuerkurve (78), insbesondere in Form eines Steuerschlitzes (80), aufweist, wobei an dem ersten Kopplungsabschnitt (36) wenigstens ein Steuerglied (82) vorgesehen ist, welches in die Steuerkurve (78) eingreift, wobei in Abhängigkeit einer Position des Steuerglieds (82) entlang der Steuerkurve (78) eine Schwenklage des Steuerhebels (42) um die Steuerhebel-Schwenkachse (74) und somit eine Ventilstellung der Ventileinrichtung (70), insbesondere eine Belüftungsstellung des Hubschlauch-Belüftungsventils (72), einstellbar ist.

12. Handhabungsanlage (10) nach einem der vorherigen Ansprüche, wobei der Endeffektor (22) über eine Verbindungsstange (28) mit dem Hubschlauch (16) verbunden ist, wobei die Verbindungsstange (28) an einem ersten Ende (30) mit dem Endeffektor (22) drehfest verbunden ist und an einem zweiten Ende (32) um die Endeffektor-Drehachse (26) drehbar mit dem Hubschlauch (16), insbesondere endständig, verbunden ist, wobei der erste Kopplungsabschnitt (36) zwischen dem erstem Ende (30) und dem zweiten Ende (32) der Verbindungsstange (28) angeordnet ist.

13. Handhabungsanlage (10) nach dem vorherigen Anspruch, wobei der erste Kopplungsabschnitt (36) die Verbindungsstange (28) derart umgreift, dass die Verbindungsstange (28) und der erste Kopplungsabschnitt (36) sowohl translatorisch entlang der Endeffektor-Drehachse (26) als auch rotatorisch um die Endeffektor-Drehachse (26) relativ zueinander verlagerbar sind.

14. Handhabungsanlage (10) nach einem der Ansprüche 12 oder 13 bei Rückbezug auf Anspruch 4, wobei das erste Übertragungsglied (56), insbesondere erste Zahnrad (62), koaxial zu der Verbindungsstange (28) angeordnet ist und/oder mit der Verbindungsstange (28) drehfest verbunden ist.

15. Handhabungsanlage (10) nach einem der vorherigen Ansprüche, wobei die Verbindungseinrichtung (44) derart ansteuerbar ausgebildet ist, dass sie wahlweise aktivierbar oder deaktivierbar ist, wobei eine Steuerung, insbesondere Manipulator-Steuerung, zum Ansteuern der Verbindungseinrichtung (44) vorgesehen ist.
